# EUROPÄISCHE PATENTSCHRIFT

(11) **EP 3 651 974 B1**
(45) Veröffentlichungstag und Bekanntmachung des Hinweises auf die Patenterteilung: **28.07.2021**
(21) Anmeldenummer: 18759269.6
(22) Anmeldetag: 09.08.2018
(51) Int. Cl.: B29C 65/00, B29D 23/24, B32B 1/08, B32B 25/08, F16L 11/04

(54) **MEHRLAGIGER INNENSCHLAUCH**
MULTILAYER INNER TUBE
TUBE INTÉRIEUR MULTICOUCHE

(30) Priorität: 11.08.2017 DE 102017118314
(43) Veröffentlichungstag der Anmeldung: 20.05.2020
(73) Patentinhaber: TPU Plus GmbH, 52078 Aachen (DE)
(72) Erfinder: MATTFELD, Patrick, 52074 Aachen (DE)
(74) Vertreter: Bauer, Dirk
(86) Internationale Anmeldenummer: PCT/EP2018/071615
(87) Internationale Veröffentlichungsnummer: WO 2019/030320

(56) Entgegenhaltungen:
- WO-A1-2012/151223
- CN-U- 202 042 296
- DE-A1-102010 026 582
- JP-A- H 035 213

## Beschreibung

Die Erfindung betrifft einen mehrlagigen Innenschlauch für ein Fahrzeugrad mit einer Innenschicht, die mit einer gasförmigen Füllung des Innenschlauchs in Kontakt steht und mit einer von der Innenschicht unterschiedenen Außenschicht, die mit einer äußeren Umgebung des Innenschlauchs in Kontakt steht, wobei die Innenschicht und die Außenschicht aus thermoplastischem Polyurethan besteht.

Fahrräder weisen typischer Weise Reifen aus einem Mantel und einem luftgefüllten Innenschlauch auf. Der Mantel hält den Reifen gegen den Innendruck des Innenschlauchs formstabil, überträgt Beschleunigungs-, Brems- und Seitenführungskräfte auf die Fahrbahn und ist häufig profiliert. Der Innenschlauch ist zur Befüllung mit einem Ventil versehen und luftdicht und hält so den Innendruck aufrecht.

Mehrlagige Innenschläuche mit einer Innen- und einer Außenschicht aus thermoplastischem Polyurethan (auch "TPU" oder "TPUR") vermeiden die Nachteile einlagiger Schläuche, insbesondere mangelnde Lufthaltigkeit und Pannensicherheit traditioneller einlagiger Butyl- oder Gummischläuche. Durch die Verwendung von TPU kann zudem das Gewicht des Innenschlauchs vermindert werden. JP H-03 5213 A schlägt vor, einen mehrlagigen Innenschlauch der vorgenannten Art aus Kostengründen mit einer stabilisierenden Innenschicht aus einem Polyolefin, Polystyren, Polybutadien, PVC oder Polyisopropen zu formen.

Im Hintergrund der Erfindung sind verschiedene Innenschläuche aus oder mit TPU bekannt: So offenbart WO 2015/155596 A1 einen einlagigen Innenschlauch aus TPU, FR 2 598 653 A1 schlägt vor, einen solchen zum Verschweißen auf der Innenseite mit einem Puder als Trennmittel zu versehen. WO 2014/150550 A1 offenbart einen Schlauch mit einer Zwischenschicht aus TPU als Klebeschicht und einer darüber koextrudierten Trennschicht.

Im weiteren Hintergrund sind verschiedene mehrlagige Innenschläuche bekannt: FR 2 335 335 A1 schlägt vor, einen zweilagigen Innenschlauch durch Tauchen einer Form zunächst in Butyllatex und dann in Kautschuk und anschließend gemeinsames Vulkanisieren beider Schichten herzustellen. DE 26 53 211 A1 schlägt vor, einen Innenschlauch aus Naturkautschuk mit Polyisobutylen auszukleiden. US 6,418,991 B1 schlägt vor, einen Innenschlauch mit einem stichfesten Polyamidgewebe zu verstärken. DE 10 2010 026582 A1 und EP 1 940 605 B1 schlagen vor, einen Innenschlauch zur Lauffläche mit einer Kammer zu versehen, die mit einem Gel gefüllt ist. DE 27 25 702 A1 und CN 205326695 U beschreiben jeweils Schlauchreifen mit einer tragenden Karkasse zwischen zwei Elastomerschichten. CN 202042296 U offenbart einen mehrlagigen hitzebeständigen Schlauch mit einer Zwischenlage aus Silikagel.

Außerdem offenbart im Hintergrund der Erfindung WO 2012/1511223 A1 eine mehrlagige Folienverpackung mit Zwischenschichten aus einem Ethylen-Vinylalkohol-Copolymer als Gasbarriere.

### Aufgabe

Der Erfindung liegt die Aufgabe zugrunde, die Lufthaltigkeit des Innenschlauchs zu verbessern.

### Lösung

Ausgehend von den bekannten Innenschläuchen wird nach der Erfindung eine Zwischenschicht aus einem Ethylen-Vinylalkohol-Copolymer zwischen der Innenschicht und der Außenschicht vorgeschlagen. Ein solcher Innenschlauch weist eine weiter erhöhte Lufthaltigkeit auf.

Vorzugsweise weist ein erfindungsgemäßer Innenschlauch eine weitere Zwischenschicht aus einem Gel zwischen der Innenschicht und der Außenschicht auf. Ein Gel ist ein viskoelastisches, sich nicht entmischendes Gemenge aus einer festen und einer flüssigen Komponente. Ein solcher Innenschlauch weist eine weiter erhöhte Pannensicherheit auf, weil das viskoelastische Gel durch Beschädigungen entstehende Durchstöße schließt und Fremdkörper dichtend umfließt.

Vorzugsweise härtet das Gel im Kontakt mit Luft aus. Ein solcher Innenschlauch weist eine noch weiter erhöhte Pannensicherheit auf, weil das aushärtende Gel durch Beschädigung entstandene bleibende Löcher in der angrenzenden Innen- oder Außenschicht dauerhaft schließt.

Vorzugsweise enthält in einem solchen erfindungsgemäßen Innenschlauch das Gel Agarose. Agarose (CAS 9012-36-6) ist ein starker, aber kostengünstiger wasserlöslicher Gelbildner mit hoher Stabilität gegen Alterung.

Vorzugsweise weist ein erfindungsgemäßer Innenschlauch eine weitere, bis zu 220 °C hitzebeständige Zwischenschicht zwischen Innenschicht und Außenschicht auf. TPU ist bis zu 180 °C hitzebeständig. Ein solcher Innenschlauch weist gegenüber einem erfindungsgemäßen Innenschlauch, der ausschließlich aus extrudiertem TPU besteht, eine erhöhte Hitzestabilität auf.

Vorzugsweise weist ein erfindungsgemäßer Innenschlauch eine weitere Zwischenschicht aus demselben oder einem anderen thermoplastischen Polyurethan auf. Ein solcher Innenschlauch weist eine weiter erhöhte Lufthaltigkeit und Pannensicherheit auf. Weiterhin bietet ein solcher Innenschlauch die Möglichkeit, zwei Zwischenräume zwischen TPU-Schichten mit unterschiedlichen Materialien zu füllen. Die Anzahl der TPU-Schichten ist vor allem durch die Herstellverfahren, insbesondere die möglichen Schichtdicken begrenzt. Mit den heutigen technischen Möglichkeiten erscheinen erfindungsgemäße Innenschläuche mit bis zu dreizehn TPU-Schichten sinnvoll.

Vorzugsweise ist an einem erfindungsgemäßen Innenschlauch die Außenschicht geschäumt. Ein solcher Innenschlauch verbessert den tribologischen Kontakt zwischen dem Innenschlauch und dem Mantel und reduziert so die in diesem Kontakt auftretende Verlustleistung.

Vorzugsweise wird ein erfindungsgemäßer Innenschlauch hergestellt, indem aus einem endlosschlauchförmig mehrlagigen Extrudat ein Rohling mit zwei Schlauchenden geschnitten und der Rohling torusförmig geschlossen wird und die zwei Schlauchenden miteinander verschweißt werden. Diese Art der Herstellung von Innenschläuchen ist aus dem Stand der Technik bekannt und bewährt.

Weiter vorzugsweise wird in einem solchen Verfahren zunächst an einer Nahtstelle auf einer Innenseite eines ersten der Schlauchenden eine Schutzschicht appliziert, dann ein zweites der Schlauchenden über die Nahtstelle hinaus über das erste Schlauchende geschoben und schließlich werden die Schlauchenden an der Nahtstelle zwischen zwei aufeinander zu geführten Spannbacken flach zusammengepresst und in dieser Stellung verschweißt, wobei die Schutzschicht ein Verschweißen der Innenseite des ersten Schlauchendes verhindert. Ein solches Verfahren vermeidet die Gratbildung an der Nahtstelle.

In erfindungsgemäßen Innenschläuchen sind die Schichten untrennbar miteinander verbunden und in der Regel nur unter einem Mikroskop als Schichten zu identifizieren.

### Ausführungsbeispiele

Die Erfindung wird nachfolgend anhand von Ausführungsbeispielen erläutert. Es zeigen
- Fig. 1: einen Schnitt eines ersten erfindungsgemäßen Innenschlauchs,
- Fig. 2: einen Schnitt eines zweiten erfindungsgemäßen Innenschlauchs,
- Fig. 3: einen Schnitt eines dritten erfindungsgemäßen Innenschlauchs und
- Fig. 4: einen Schnitt eines vierten erfindungsgemäßen Innenschlauchs.

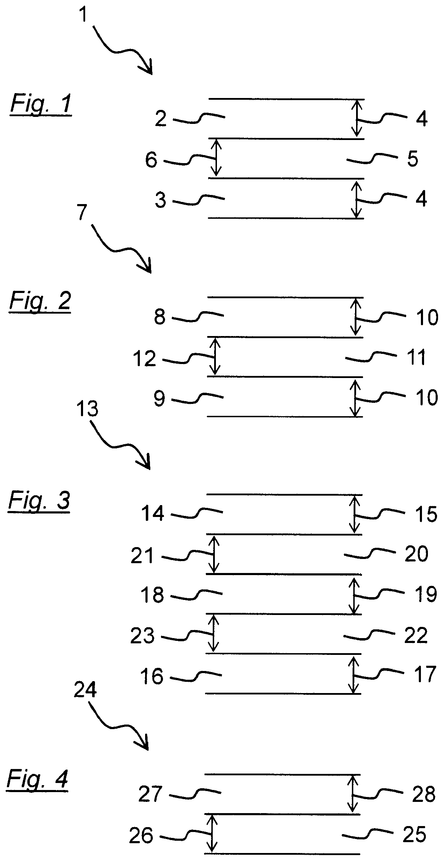

Der in Figur 1 im Schnitt gezeigte erste erfindungsgemäße Innenschlauch 1 weist eine Innenschicht 2 und eine Außenschicht 3 mit einer Dicke 4 von je 170 *µm*, beide aus TPU (Handelsname BASF Elastollan SP 883) sowie eine Zwischenschicht 5 mit einer Dicke 6 von 10 *µm* aus EVAL (Handelsname EVAL F 101B) auf. Der erste Innenschlauch 1 zeichnet sich durch eine hohe Lufthaltigkeit aus.

Der in Figur 2 im Schnitt gezeigte zweite erfindungsgemäße Innenschlauch 7 weist zwischen Innenschicht 8 und Außenschicht 9 mit einer Dicke 10 von je 150 *µm* eine Zwischenschicht 11 mit einer Dicke 12 von 50 *µm* aus einem Gel aus einer flüssigen Dichtmilch (Handelsname Tune One Shot) und Agarose auf. Darüber hinaus entspricht der zweite Innenschlauch 7 dem ersten Innenschlauch 1. Der zweite Innenschlauch 7 zeichnet sich durch eine hohe Pannensicherheit aus.

Der in Figur 3 im Schnitt gezeigte dritte erfindungsgemäße Innenschlauch 13 weist zwischen einer Innenschicht 14 mit einer Dicke 15 von 100 *µm* und einer Außenschicht 16 mit einer Dicke 17 von 50 *µm* eine erste Zwischenschicht 18 mit einer Dicke 19 von 100 *µm,* alle aus dem o.g. TPU auf.

Zwischen der Innenschicht 14 und der ersten Zwischenschicht 18 weist der dritte Innenschlauch 13 eine zweite Zwischenschicht 20 mit einer Dicke 21 von 10 *µm* aus dem o.g. EVAL und zwischen der ersten Zwischenschicht 18 und der Außenschicht 16 eine hitzebeständige weitere Zwischenschicht 22 mit einer Dicke 23 von 100 *µm* aus einem Polystyren-Ethylen-Butylen-Copolymer (Handelsname Kraton A1535 H) auf. Der dritte Innenschlauch 13 zeichnet sich durch eine hohe Lufthaltigkeit und Hitzebeständigkeit aus.

Der in Figur 4 im Schnitt gezeigte vierte erfindungsgemäße Innenschlauch 24 weist lediglich eine Außenschicht 25 mit einer Dicke 26 von 250 *µm* aus einem sehr weichen und elastischen TPU (Handelsname BASF Elastollan Soft 45A) und einer Innenschicht 27 mit einer Dicke 28 aus dem o.g. härteren TPU (Elastollan SP 883) auf. Der Innenschlauch 24 zeichnet sich durch einen sehr geringen Rollwiderstand und eine geringe Walkarbeit und damit einen sehr guten Fahrkomfort aus.

Die gezeigten erfindungsgemäßen Innenschläuche 1, 7, 13 und 24 sind durch Blasfolienextrusion mit TPU auf Polyesterbasis zusammen mit den Füllungen zwischen den TPU-Schichten 2, 3, 8, 9, 14, 16, 18 zunächst schlauchförmig endlos gefertigt, abgelängt und torusförmig verschweißt. Die Außenschichten 3, 9, 16 und 25 sind geschäumt. Die erfindungsgemäßen Innenschläuche 1, 7, 13 und 24 sind für ein nicht dargestelltes 29"-Fahrzeugrad eines Fahrrads geeignet und weisen im nicht unter Druck gefüllten Zustand einen Außendurchmesser von 30 *mm* auf.

In den Figuren sind
- 1: Innenschlauch
- 2: Innenschicht
- 3: Außenschicht
- 4: Dicke
- 5: Zwischenschicht
- 6: Dicke
- 7: Innenschlauch
- 8: Innenschicht
- 9: Außenschicht
- 10: Dicke
- 11: Zwischenschicht
- 12: Dicke
- 13: Innenschlauch
- 14: Innenschicht
- 15: Dicke
- 16: Außenschicht
- 17: Dicke
- 18: Zwischenschicht
- 19: Dicke
- 20: Zwischenschicht
- 21: Dicke
- 22: Zwischenschicht
- 23: Dicke
- 24: Innenschlauch
- 25: Außenschicht
- 26: Dicke
- 27: Innenschicht
- 28: Dicke

## Patentansprüche

1. Mehrlagiger Innenschlauch (1, 7, 13, 24) für ein Fahrzeugrad mit einer Innenschicht (2, 8, 14, 27), die mit einer gasförmigen Füllung des Innenschlauchs (1, 7, 13, 24) in Kontakt steht und mit einer von der Innenschicht (2, 8, 14, 27) unterschiedenen Außenschicht (3, 9, 16, 25), die mit einer äußeren Umgebung des Innenschlauchs (1, 7, 13, 24) in Kontakt steht, wobei die Innenschicht (2, 8, 14, 27) und die
Außenschicht (3, 9, 16, 25) aus thermoplastischem Polyurethan besteht, ***gekennzeichnet durch*** eine Zwischenschicht (5, 20) aus einem Ethylen-Vinylalkohol-Copolymer zwischen der Innenschicht (2, 14) und der Außenschicht (3, 16).

2. Innenschlauch (7) nach dem vorgenannten Anspruch, ***gekennzeichnet durch*** eine Zwischenschicht (11) aus einem Gel zwischen der Innenschicht (8) und der Außenschicht (9).

3. Innenschlauch (7) nach dem vorgenannten Anspruch, ***dadurch gekennzeichnet, dass*** das Gel im Kontakt mit Luft aushärtet.

4. Innenschlauch (7) nach einem der Ansprüche 3 oder 4, ***dadurch gekennzeichnet, dass*** das Gel Agarose enthält.

5. Innenschlauch (13) nach einem der vorgenannten Ansprüche, ***gekennzeichnet durch*** eine bis zu 220 °*C* hitzebeständige Zwischenschicht (22) zwischen Innenschicht (14) und Außenschicht (16).

6. Innenschlauch (13) nach einem der vorgenannten Ansprüche, ***gekennzeichnet durch*** eine Zwischenschicht (18) aus thermoplastischem Polyurethan.

7. Innenschlauch (1, 7, 13, 24) nach einem der vorgenannten Ansprüche, ***dadurch gekennzeichnet, dass*** die Außenschicht (3, 9, 13, 25) geschäumt ist.

8. Verfahren zum Herstellen eines Innenschlauchs (1, 7, 13, 24) nach einem der vorgenannten Ansprüche, ***dadurch gekennzeichnet, dass*** aus einem endlos-schlauchförmig mehrlagigen Extrudat ein Rohling mit zwei Schlauchenden geschnitten und der Rohling torusförmig geschlossen wird und die zwei Schlauchenden miteinander verschweißt werden.

9. Verfahren nach dem vorgenannten Anspruch, ***dadurch gekennzeichnet, dass*** zunächst an einer Nahtstelle auf einer Innenseite eines ersten der Schlauchenden eine Schutzschicht appliziert, dann ein zweites der Schlauchenden über die Nahtstelle hinaus über das erste Schlauchende geschoben wird und schließlich die Schlauchenden an der Nahtstelle zwischen zwei aufeinander zu geführten Spannbacken flach zusammengepresst und in dieser Stellung verschweißt werden, wobei die Schutzschicht ein Verschweißen der Innenseite des ersten Schlauchendes verhindert.

## Claims

1. A multilayer inner tube (1, 7, 13, 24) for a vehicle wheel, comprising an inner layer (2, 8, 14, 27), which is in contact with a gaseous filling of the inner tube (1, 7, 13, 24), and an outer layer (3, 9, 16, 25), which is different from the inner layer (2, 8, 14, 27) and is in contact with an external environment of the inner tube (1, 7, 13, 24), the inner layer (2, 8, 14, 27) and the outer layer (3, 9, 16, 25) consisting of thermoplastic polyurethane, **characterised by** an intermediate layer (5, 20) of an ethylene-vinyl alcohol copolymer between the inner layer (2, 14) and the outer layer (3, 16).

2. The inner tube (7) according to the preceding claim, **characterised by** an intermediate layer (11) of a gel between the inner layer (8) and the outer layer (9).

3. The inner tube (7) according to the preceding claim, **characterised in that** the gel cures in contact with air.

4. The inner tube (7) according to one of Claims 3 or 4, **characterised in that** the gel contains agarose.

5. The inner tube (13) according to any one of the preceding claims, **characterised by** an intermediate layer (22) which is heat-resistant up to 220 °C between the inner layer (14) and the outer layer (16).

6. The inner tube (13) according to any one of the preceding claims, **characterised by** an intermediate layer (18) of thermoplastic polyurethane.

7. The inner tube (1, 7, 13, 24) according to any one of the preceding claims, **characterised in that** the outer layer (3, 9, 13, 25) is foamed.

8. A method for producing an inner tube (1, 7, 13, 24) according to any one of the preceding claims, **characterised in that** a blank having two tube ends is cut from a continuous tubular multi-layered extrudate, and the blank is closed in a toroidal shape, and the two tube ends are fused to each other.

9. The method according to the preceding claim, **characterised in that** first a protective layer is applied to a seam on an inner side of a first of the tube ends, then a second of the tube ends is pushed over the first tube end beyond the seam, and finally the tube ends are pressed flat at the seam between two clamping jaws guided towards each other and are fused in this position, the protective layer preventing fusing of the inner side of the first tube end.

## Revendications

1. Chambre à air multicouches (1, 7, 13, 24) pour une roue de bicyclette, dotée d'une couche interne (2, 8, 14, 27), qui est en contact avec une charge gazeuse de la chambre à air (1, 7, 13, 24) et dotée d'une couche externe (3, 9, 16, 25), différente de la couche interne (2, 8, 14, 27), qui est en contact avec un environnement extérieur de la chambre à air (1, 7, 13, 24) la couche interne (2, 8, 14, 27) et la couche externe (3, 9, 16, 25) étant constituées d'un polyuréthane thermoplastique, **caractérisée par** une couche intermédiaire (5, 20) en un copolymère alcool vinylique-éthylène entre la couche interne (2, 14) et la couche externe (3, 16).

2. Chambre à air (7) selon la revendication précédente, **caractérisée par** une couche intermédiaire (11) en un gel entre la couche interne (8) et la couche externe (9) .

3. Chambre à air (7) selon la revendication précédente, **caractérisée en ce que** le gel se solidifie au contact de l'air.

4. Chambre à air (7) selon l'une quelconque des revendications 3 ou 4, **caractérisée en ce que** le gel contient de l'agarose.

5. Chambre à air (13) selon l'une quelconque des revendications précédentes, **caractérisée par** une couche intermédiaire (22) thermorésistante jusqu'à 220 °C entre la couche interne (14) et la couche externe (16) .

6. Chambre à air (13) selon l'une quelconque des revendications précédentes, **caractérisée par** une couche intermédiaire (18) en polyuréthane thermoplastique.

7. Chambre à air (1, 7, 13, 24) selon l'une quelconque des revendications précédentes, **caractérisée en ce que** la couche externe (3, 9, 13, 25) est expansée.

8. Procédé, destiné à fabriquer une chambre à air (1, 7, 13, 24) selon l'une quelconque des revendications précédentes, **caractérisée en ce qu'**à partir d'un produit extrudé continu de forme tubulaire, l'on coupe une ébauche dotée de deux extrémités de tube et l'on ferme l'ébauche de forme toroïdale et l'on soude l'un à l'autre les deux extrémités tubulaires.

9. Procédé selon la revendication précédente, **caractérisée en ce que** dans un premier temps, l'on applique une couche protectrice sur une jointure sur une face interne d'une première des extrémités tubulaires, puis l'on pousse une deuxième des extrémités tubulaires par-dessus la jointure et pour finir, l'on comprime à plat les extrémités tubulaires sur la jointure entre deux mâchoires de serrage ramenées l'une vers l'autre et on les soude dans cette position, la couche protectrice empêchant que la face interne de la première extrémité tubulaire ne se soude.
